# EUROPEAN PATENT SPECIFICATION

(11) **EP 0 478 228 B1**
(45) Date of publication and mention of the grant of the patent: **22.06.1994**
(21) Application number: 91308573.4
(22) Date of filing: 20.09.1991
(51) Int. Cl.: F04D 7/04, F04D 13/12, B01D 19/00

(54) **Method and apparatus for the discharge of gas from a liquid solids mixture**
Verfahren und Apparat zur Freisetzung von Gas aus einem Flüssigkeit/Feststoff-Gemisch
Méthode et dispositif pour la décharge de gaz d'un mélange liquide-solide

(30) Priority: 25.09.1990 FI 904701
(43) Date of publication of application: 01.04.1992
(73) Proprietor: A. AHLSTROM CORPORATION, 29600 Noormarkku (FI)
(72) Inventor: Elonen, Jorma, SF-42300 Jämsänkoski (FI); Manninen, Heikki, SF-46810 Ummeljoki (FI)
(74) Representative: Gilmour, David Cedric Franklyn

(56) References cited:
- EP-A- 0 298 949
- EP-A- 0 300 251
- US-A- 3 230 890

## Description

The present invention relates to a method and an apparatus for the discharge of gas from a liquid-solids mixture. The apparatus in accordance with the invention may be applied in such places where air is separated from a medium by means of reduced pressure/vacuum. The apparatus in accordance with the present invention is especially applicable for the pulp and paper industry in situations where gas has been separated from the fiber suspension, but where the gas contains some fibers or other solids, which must be separated from the gas flow prior to the vacuum pump generating suction.

Althrough the invention is described below in connection with the apparatuses and processes of wood processing industry, the method and apparatus may well be applied also for other corresponding purposes.

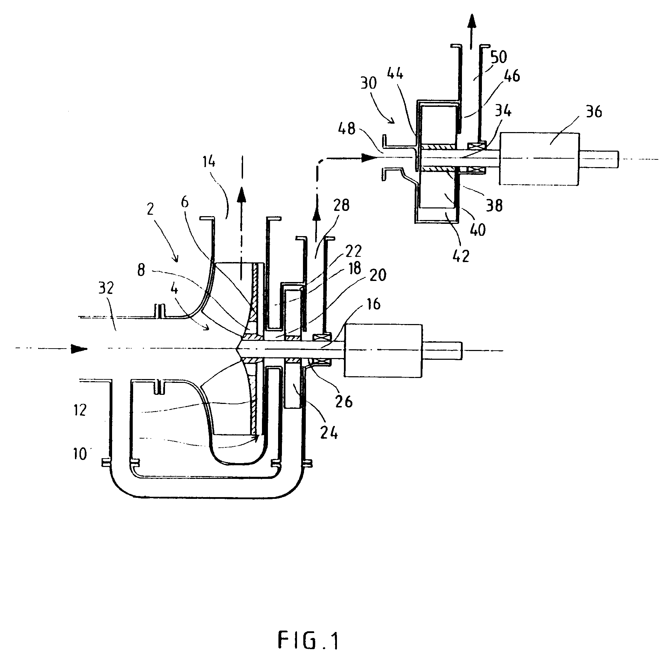

There are of course already systems used for a corresponding purpose. In these systems gas is separated during the pumping from the fiber suspensions of the wood processing industry, and said gas is passed to a vacuum pump via a second impeller in a separate chamber behind the impeller of a centrifugal pump. This kind of system is illustrated, for example, in US patent 3, 230, 890, in which Fig. 1 discloses a system in which a vacuum pump has been arranged at the drive end of the shaft of the centrifugal pump. The same shaft has been provided with a second impeller in a separate chamber immediately behind the impeller of the centrifugal pump, the second impeller pumping the liquid which has flowed to the space tangentially forward like the centrifugal pump. A vacuum pump is combined with the chamber of the second impeller by a pipe which is outside the pump and by a duct which is in communication with the rear wall of said chamber and leading into the inner rim of the chamber into close proximity with the shaft. The centrifugal impeller is provided with openings, through which gas is allowed to flow due to the suction of a vacuum pump to the separation chamber behind the impeller. In the separation chamber the gas and the liquid and solids possibly entrained therewith are subjected to a force component parallel to the rim, which generates by means of a rotational movement a centrifugal force, the purpose of which is to separate solids from the gas so that the suction pump could draw merely gas or possibly some liquid, but no solids. In said publication it is proposed separated solids and the liquid exited therewith be returned to the suction duct in the suction side of the pump.

Another prior art publication is US Patent 4,675,033, which generally speaking relates to a fluidizing centrifugal pump for pumping high consistency pulps. Said publication discloses several technical solutions slightly deviating from each other for separating gas from fiber suspensions. According to one embodiment there are openings between the vanes of the impeller and the shaft of the pump, through which openings the gas accumulating as a bubble in front of the impeller is allowed to flow to the space behind the impeller. The rear wall of the pump is provided with an annular channel, through which the gas is allowed to flow further to a separation chamber, in which a bladed rotor separates from the gas solid particles entrained therewith and gas may be passed through a separately run vacuum pump out of the system.

As can be seen in the prior art, different methods have been developed on one hand for separating gas from the liquids and on the other hand for separating solids from said gas fraction. A separate and, even more lately, an integrally built vacuum pump has been used and a separation chamber preceding it, which chamber has until now been located behind the impeller of a centrifugal pump. It may even be said that it is always located as close to the impeller as is technically possible. There are of course reasons for this. It is of course natural to think that the gas is separated from the solids-liquid mixture in connection with the pump itself, whereby said solids-liquid mixture may be easily returned to the suction side of the pump or even further to the suction chamber. When an integrally built vacuum pump is used, the limited space available is often a problem, because at least the interior of a conventional centrifugal pump is too small for both a separation chamber and a vacuum pump which are separate relative to the centrifugal impeller, whereby one will have to manage with a separation space arranged into communication with the rear vanes of the impeller of a centrifugal pump, which again is not efficient enough in all situations.

However, it happens every now and then that the solids clog either the inlet opening of the separation chamber, the outlet opening thereof, the gas discharge opening or even the entire vacuum pump mounted on the shaft. This thereby results in the stopping of the pump and a time-consuming cleaning and reparation process, during which period the mill has to manage without said pump. It can therefore be said that at worst a rather small fiber bundle or knot particle can stop an entire pulp mill.

However, a few deficiencies can be pointed out in both described systems. Their application range is restricted, because it is not possible to adjust the rotational speed of the centrifugal pump regardless of other components, whereby several parallel versions are required. Additionally the size of the suction pump is restricted by the size of the centrifugal pump. Centrifugal pumps including vacuum pumps cannot be used without said vacuum pumps, although the inflow pressure would be sufficient for the gas discharge. Also low rotational speeds of the centrifugal pump are out of the question, because the second impeller arranged into communication with the pump would leak. Further, the construction used would make it even more difficult, practically speaking impossible, to use standard spare parts. In problematic cases it would be necessary to perform difficult repair operations, because all the sensitive components are positioned inside the same body without a possibility to make quick and easy replacements.

Thus it is already known that when pumping the fiber suspensions of the wood processing industry with a centrifugal pump, at least when pumping thicker pulps, gas must be separated from the pulp, because in the pump gas separates from the pulp and tends to generate a gas bubble in the center of the pump in front of the impeller of the pump, whereby the pump is no longer able to draw pulp and pump it. Gas has thus been separated from the pulp especially in order to ensure the pumping of the pulp. Fig. 1 discloses a system already discussed in said publications for the discharge of gas from a centrifugal pump 2. In the system in accordance with Fig. 1 the rear plate 6 of the impeller 4 of the centrifugal pump 2 has been provided with openings 8 for transfering the gas to the space 10 behind the impeller. The rear surface on the rear plate 6 of the impeller 4 is provided with rear vanes 12, the purpose of which is to pump liquid-fiber suspension which has entered the space 10 through openings 8 back to the main flow towards the pressure opening 14 of the pump. A subflow mainly containing gas is led from the central opening 20 in the rear wall 18 of the pump 2 surrounding the shaft 16 of the pump 2 to the separation chamber 22, in which an impeller 24 rotates, the purpose of which impeller is to separate primarily the solids in the subflow flowing to the chamber 22 so as to prevent it from entraining with the gas flow being discharged through the center of the chamber 22 via an opening 26 and flowing through pipe 28 to a vacuum pump 30 arranged separate from the actual centrifugal pump 2, and which vacuum pump generates a suction on which the whole operation of the gas discharge system is based. Fibrous fraction from the separation chamber 22 is passed back to the suction side of the centrifugal pump 2, in the system according to the drawing to suction duct 32 of the pump. When the fibers or other solids of the fiber suspension come to the vacuum pump 30 they could gradually clog the pump 30 and thus prevent the gas discharge and finally result in expensive stoppages. In most cases in this kind of systems a liquid ring pump is used as a vacuum pump; such a pump is also illustrated in the arrangement in accordance with Fig. 1. Said pump comprises a shaft 34, to the one end of which is naturally mounted the drive means 36 of the pump and to the other end a rotor 38, on which a number of blades 40 are mounted. The rotor 38 is surrounded by an eccentric chamber 42, the side walls 44, 46 of which, or at least one of them, is provided with suction and discharge conduits 48, 50 for gas. The apparatus operates in such a way that when the rotor rotates the blades throw the liquid in the chamber due to the centrifugal force to the rim of the chamber to form a rotary ring, which gives the name "a liquid ring pump" to the pump. Since the blades attached to the hub of the rotor have been arranged as close as possible, in other words with as small clearance as possible, to the side walls of the chamber, normally by sealing with sealing water or liquid, and because the liquid ring seals the tip area of the blades, under- or overpressure areas are generated between the blades according to whether the liquid ring moves away from the shaft or towards it. By connecting the underpressure areas with a conduit 48 to the gas source a suction of gas towards the liquid ring pump is generated. Respectively, by connecting the positive pressure areas to the gas discharge conduit 50 gas or excess liquid possibly flowed to the pump is further pumped out of the pump.

The construction in accordance with Fig. 1 has, however, a number of deficiencies. For example, it is not possible to use pumps with a good suction head, because their rotational speed is so low, that when a separation impeller is arranged on the same shaft and thus rotates slowly it leaks, in other words it cannot efficiently separate liquid and solids from the gas flow. For the same reason the adjustment of the rotational speed of the pump is practically speaking impossible. Additionally the construction itself deviates a lot from the conventional centrifugal pump due to a separate separation chamber. It is difficult, often even impossible to apply the standard components manufactured in large amounts for a conventional centrifugal pump to be used in the pump type described above. In practice, the above described system may be designed and developed optimal only for a particular purpose, in which the material to be pumped has a particular amount of gas, which is separated and a particular amount of solids flows to the gas discharge. Further, this means in practice that even the suction head of the pump or the inlet pressure should not substantially vary from the design parameters.

The method and apparatus in accordance with the present invention are used to eliminate or minimize all the deficiencies of the prior art apparatuses and a most suitable arrangement for a particular purpose may be used to discharge gas from the centrifugal pump.

The method and apparatus in accordance with the present invention are described more in detail below, by way of example, with reference to the accompanying drawings, in which :
Fig. 1 is a schematic sectional illustration of a system in accordance with the prior art;
Fig. 2 is a schematic sectional illustration of a second system in accordance with the prior art;
Fig. 3 is a schematic sectional illustration of an embodiment of the present invention; and
Fig. 4 is a schematic sectional illustration of a second embodiment of the present invention.

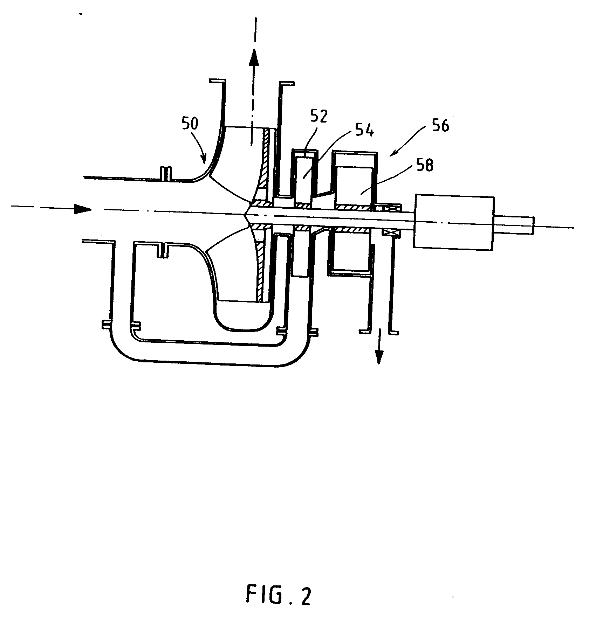

The system shown in Fig. 1 and its operation has already been discussed above in connection with prior art as well as the arrangement Fig. 2 shown in which substantially corresponds to the pump disclosed in US Patent 3,230,890. The pump combination of Fig. 2 consequently comprises a centrifugal pump 50, a separation chamber 52 with an impeller 54 and a vacuum pump 56 with a rotor 58 all mounted on the same shaft.

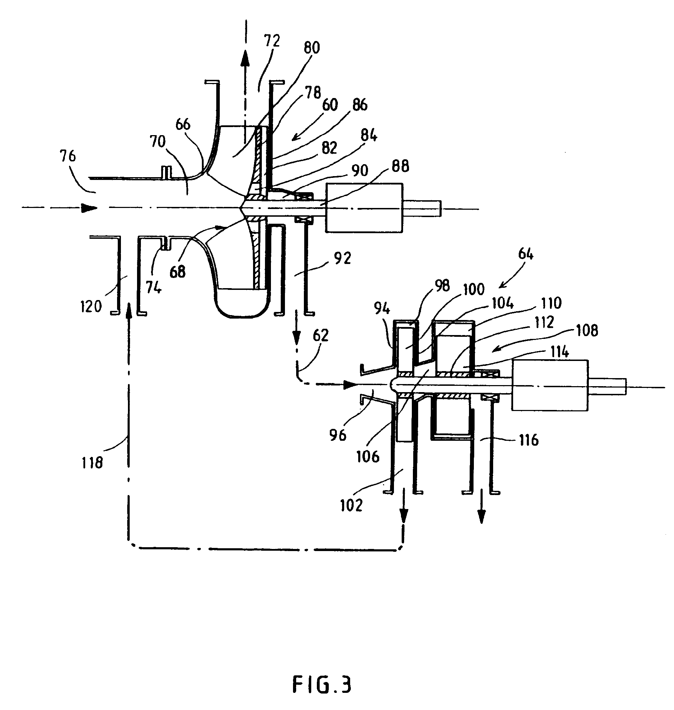

Fig. 3 discloses a system according to a preferred embodiment of the present invention, which comprises a centrifugal pump, which can be either a conventional pump 60 or a so called fluidizing centrifugal pump, and a separator-vacuum pump combination 64 connected thereto by a pipe 62. The centrifugal pump 60 conventionally comprises a casing 66 of the pump, an impeller 68 rotatably arranged therein, an axial suction duct 70 and a pressure conduit 72. The section duct 70 is connected with a flange 74 to a suction conduit 76, which can alternatively be replaced by a vessel or the like containing the fluid to be pumped. The impeller 68 comprises a rear plate 78, working vanes 80 on the side of the suction duct 70 thereof, so called rear vanes 82 on the opposite side thereof and gas discharge openings 84 extending through it, which openings 84 are not necessarily provided for all purposes and all kinds of impellers. It is possible to replace said openings either by open slots extending from the rim of the rear plate towards the shaft or merely by determining the diameter of the rear plate so small that gas may be discharged around the rim of the rear plate to the gas discharge. The rear wall 86 of the centrifugal pump 60 is preferably provided with a central opening 90 surrounding the shaft 88 of the pump 60 or a chamber, which is connected to the pipe 62 via a conduit 92.

The second main component of the apparatus, the separator-vacuum pump combination 64, comprises a preferably central conduit 96 arranged to the front wall 94 thereof for connecting it to said pipe 62, a separation chamber 98, an impeller 100 rotatably arranged therein, a discharge conduit 102 for solid/liquid material, a gas discharge opening 106 in the rear wall 104 of the separation chamber and a vacuum pump 108 connected thereto. A gas discharge opening 106 may be in the separation chamber end annularly around the shaft or otherwise appropriately positioned, but in the vacuum pump end eccentric as required by a liquid ring pump. A vacuum pump 108 is preferably of a so called liquid ring pump type, which comprises an eccentric casing 110, the eccentricity may be either radial, axial or a combination thereof, and a rotor 112 rotatably mounted therein and provided with a number of blades 114, due to the influence of which a liquid ring circulates along the eccentric rim of the casing 110. The described system, in which one side of the vacuum pump is provided with an impeller 100, is characterized in that a gas discharge opening 116 from the vacuum pump 108 is relative to the suction opening 106 on the opposite side of the pump, in other words said openings are not located side by side as in most liquid ring pumps. However, in principle it is possible that said openings may be located side by side between the separation apparatus and a vacuum pump.

An apparatus in accordance with the invention operates in the following way. The suction generated by the vacuum pump 108 is communicated via the separation chamber 98 and the pipe 62 to the back side of the impeller 68 of the centrifugal pump 60, which communicates the suction effect further either around the rim of the rear plate 78 of the impeller 68 or via the openings 84 of the rear plate 78 to the gas bubble in front of the impeller. The gas bubble is generated in front of the impeller 68 of the pump on side of the suction duct 70 either merely due to the vacuum/suction generated by the pump or possibly due to the centrifugal force resulting from the rotational force to which the material being pumped is subjected to by means of the impeller of the pump and/or the fluidizing rotor. In addition to gas discharge and fluidization of the high consistency pulps the fluidizing rotor may be used also for de-flaking of paper and other like particles when recycled pulp is concerned. In any case, the suction of the vacuum pump 108 causes the discharge of gas from the bubble to the space behind the impeller 68 either completely clean or as is normal, mixed with the material being pumped, whereby both liquid and fibers are entrained, when fiber suspensions are concerned, with the gas. In the embodiment described by the drawing the rear vanes 82 rotating in the space behind the impeller pump at least part of the solid material and/or liquid flowing to the space back to the main flow in the spiral of the pump. Since the pipe 62 from the centrifugal pump 60 to the separation chamber 98 is wide, there is no risk of the fibers and liquid still entrained with the flow clogging the pipe 62. The separated fluid consequently freely flows to the separation chamber 98, in which it is subjected to an intense centrifugal force by the rotary impeller 100, the purpose of which is to separate all the solid material to the outer rim of the chamber 98, wherefrom it is further led through the discharge conduit 102, for example, back to the suction side of the centrifugal pump to the suction pipe 76 via pipe 118 and conduit 120. The rear wall 104 of the separation chamber 98 is provided with an opening 106, which is arranged centrally at the surface facing the separation chamber 98, but non-centrally at the surface facing the vacuum pump 108 due to the operation of the vacuum pump. The gas flows through said opening 106 to the vacuum pump 108, the suction opening of which is arranged in the wall of the casing 110 in such a way that it is located in the portion of the casing 110 which expands in volume relative to the rotational direction of the rotor 112 when the liquid ring escapes away from the shaft, whereby naturally suction is generated when the generating space tends to fill. Respectively, gas is discharged from the pump from the opposite side of the shaft, whereby the chamber volume tends to decrease when the liquid ring approaches the shaft. It is in many cases important for the operation of the liquid ring pump that it is able to create, when necessary, a very high underpressure or respectively that it is possible to further pump gas or generally material coming from the gas discharge opening with an as high pressure as possible. Consequently, the sealing of the clearance between the rotor of the liquid ring pump and its chamber is crucial and in most cases is ensured by the feed of the sealing liquid to the space between the blades and the walls of the chamber and also by arranging the clearances between the side edges of the blades and the chamber as small as possible.

It is also possible that the solid material or the excess liquid being discharged from the separation chamber is returned, for example, to the upper part of the mass tower. Similarly, also the material being discharged from the vacuum pump, mainly gas, which, however, may include also liquid and fibers to some extent, may be returned to the mass tower, whereby it is essential that the vacuum pump must be able to develop a sufficient head to transfer the mixture to the mass tower.

Further it should be mentioned that if in some cases the amount of the fibrous material flowing to the vacuum pump seems to create a risk of clogging the pump, a screen surface can be mounted between the separation chamber and the vacuum pump, by means of which the drifting of the fibers to the vacuum pump is prevented. Thereby there is of course the risk that said screen surface tends to clog because of the fibers, but this is easily prevented by arranging, for example, the surface of the separation rotor facing the screen either to generate such a high turbulence that no fiber matting is formed on the screen surface, or by arranging a ridge to spirally extend on the rotor surface very close to the screen surface thereby wiping the screen surface clean from fibers.

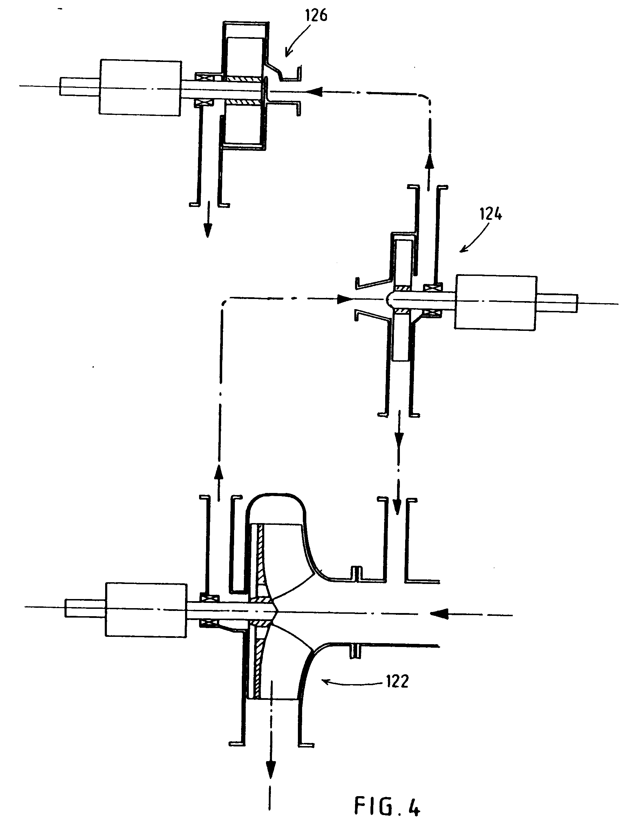

Fig. 4 discloses another embodiment of the present invention, in which all the components of this embodiment, a centrifugal pump 122, a separator 124 and a vacuum pump 126 are arranged as separate apparatuses and provided with separate drive means. Although the described system seems to be complicated and less progressive, it has several advantages compared with the above described systems and at least with the prior art technique. The described system has all the advantages of the embodiment of Fig. 3 and additionally a number of advantages brought about by its own special features. This embodiment has the largest application range of the described apparatuses, because a slowly rotating, intensively drawing centrifugal pump may be used, whereby the vacuum pump may be rotated exactly at an appropriate speed and the vacuum pump can be chosen exactly according to the particular need for gas discharge. Additionally, it is possible to use a so called long-range suction, in other words a vacuum source may be connected to the discharge side of the separating apparatus. It does not, however, have to be a liquid ring pump especially reserved for this purpose, but may be some other apparatus or a vacuum pump arranged mainly for the needs of some other apparatus. If, on the other hand, the inlet head of the system is sufficient, it is possible to leave the vacuum pump entirely out of the apparatus, whereby gas is discharged directly from the separating apparatus by means of the inlet pressure of the centrifugal pump. Furthermore, less expensive apparatuses are required, because there is no need to build and design separation chamber - vacuum pump combinations for every possible purpose and application, but it is enough to connect by means of pipes different apparatuses to each other. Also it must be noted that there is already in the market a series of applicable vacuum pumps, which can as well be used as components of this kind of system, only a very simple separate separating apparatus is required, and only a few sizes thereof are sufficient for covering all the applications that can be thought of.

As can be appreciated from above a new kind of method and apparatus have been developed for the discharge of gas from the medium, which method and apparatus enable the use of standard spare parts as often as possible. For example, in the pumping of pulp it is possible to use pumps with a standard casing type, whereby only the impeller requires some minor modifications. Additionally, a separate vacuum pump of described type makes the repairs easier and diminishes thus considerably the repair and maintenance costs of the mill. It should be noted that since the gas discharge channel leading to the separating apparatus of the centrifugal pump is wide it does not clog, but the first apparatus liable to clog is the separating apparatus, which, however, when clogging may be disconnected from the centrifugal pump, whereby there is no need to stop the centrifugal pump. It should also be born in mind that although the invention is described in detail with reference to the centrifugal pump and pulp treatment, the method in accordance with the present invention may well be applied to any application purpose, in which separated gas must be discharged from the medium.

## Claims

1. A method for the discharge of gas from a treatment apparatus for a medium, in which gas is separated from the medium being treated and which gas is discharged from the apparatus by suction, **characterized** in that
- a fraction containing gas, liquid and solid material is passed from the pulp treatment apparatus to a separate separating apparatus,
- said fraction is subjected to centrifugal forces and divided into two portions comprising a solids/liquid mixture and a gas/gas-liquid mixture;
- the solids/liquid mixture is discharged from the separation apparatus,
- the gas/gas-liquid mixture is transferred to the vacuum apparatus and
- said gas/gas-liquid mixture is discharged from the system.

2. Method in accordance with claim 1, **characterized** in that the solids/liquid mixture is returned to the treatment apparatus or to its inlet side.

3. Method in accordance with claim 1 applied to the wood processing industry, where the medium being treated is fiber suspension containing gas, **characterized** in that solids/liquid mixture is returned to the tower containing fiber suspension.

4. Method in accordance with claim 1 applied to the wood processing industry, where the medium being treated is fiber suspension containing gas, **characterized** in that the gas/gas-liquid mixture is returned to the tower containing fiber suspension.

5. An apparatus for the discharge of gas from a treatment apparatus for medium, **characterized** in that it comprises a separating apparatus (98, 124) separate from the treatment apparatus and having a separation chamber (98) and an impeller (100) for subjecting gas and any medium to centrifugal forces and for separating said gas from the medium and a vacuum apparatus (108, 126) arranged to extract said gas from the treatment apparatus and draw such through said separating apparatus (98, 124).

6. Apparatus in accordance with claim 5, **characterized** in that the separating apparatus (98) and the vacuum apparatus (108) are arranged side by side on the same shaft.

7. Apparatus in accordance with claim 5, **characterized** in that the separating apparatus comprises a separation chamber (98), an impeller (100) rotatable therein, an inlet opening (96) and a discharge opening (102), which is connected to the vacuum apparatus (108).

8. Apparatus in accordance with claim 5, **characterized** in that the vacuum apparatus (108, 126) is a vacuum pump, the suction conduit of which is connected to the discharge conduit (106) of the separating apparatus (98, 124).

9. Apparatus in accordance with claim 8, **characterized** in that vacuum pump (108, 126) is a so called liquid ring pump.

10. Apparatus in accordance with claim 5, **characterized** in that the treatment apparatus for the medium is a centrifugal pump (60, 122).

11. Apparatus in accordance with claim 5, **characterized** in that the treatment apparatus for the medium is a centrifugal pump provided with a fluidizing rotor.

12. Use of an apparatus in accordance with claim 11 as a de-flaker for waste paper.

## Patentansprüche

1. Verfahren zur Abführung von Gas aus einer Behandlungsvorrichtung für ein Medium, wobei Gas aus dem Behandlungsmedium abgeschieden wird, welches Gas durch Saugen aus der Vorrichtung abgezogen wird, dadurch **gekennzeichnet**, daß
- eine Gas, Flüssigkeit und festes Material enthaltende Fraktion von der Pulpebehandlungsvorrichtung einer getrennten Abscheidevorrichtung zugeführt wird,
- besagte Fraktion Fliehkräften ausgesetzt wird und in zwei Teile aufgeteilt wird, die aus einem Feststoff/Flüssigkeit-Gemisch und einem Gas/Gas-Flüssigkeit-Gemisch bestehen;
- das Feststoff/Flüssigkeit-Gemisch aus der Abscheidevorrichtung abgeleitet wird,
- das Gas/Gas-Flüssigkeit-Gemisch zur Vakuumvorrichtung befördert wird und
- besagtes Gas/Gas-Flüssigkeit-Cemisch aus dem System abgeleitet wird.

2. Verfahren gemäß Anspruch 1, dadurch gekennzeichnet, daß das Feststoff/Flüssigkeit-Gemisch der Behandlungsvorrichtung auf ihre Eintrittsseite rückgeführt wird.

3. Verfahren gemäß Anspruch 1 zur Anwendung in der Holzverarbeitungsindustrie, wo das zu behandelnde Medium eine gashaltige Fasersuspension ist, dadurch **gekennzeichnet,** daß dem Fasersuspension enthaltenden Stoffbehälter Feststoff/Flüssigkeit-Gemisch rückgeführt wird.

4. Verfahren gemäß Anspruch 1 zur Anwendung in der Holzverarbeitungsindustrie, wo das zu behandelnde Medium eine gashaltige Fasersuspension ist, dadurch **gekennzeichnet**, daß dem Fasersuspension enthaltenden Stoffbehälter Gas/Gas-Flüssigkeit-Gemisch rückgeführt wird.

5. Vorrichtung zur Ableitung von Gas aus einer Behandlungsvorrichtung für ein Medium, **dadurch gekenn****zeichnet**, daß sie eine Abscheidevorrichtung (98, 124), die getrennt von der Behandlungsvorrichtung ist und eine Abscheidekammer (98) und ein Laufrad umfaßt, um Gas und jedes Medium Fliehkräften auszusetzen und besagtes Gas aus dem Medium abzuscheiden und eine Vakuumvorrichtung (108, 126) aufweist, die vorgesehen ist, um besagtes Gas aus der Behandlungsvorrichtung ab- und durch besagte Abscheidevorrichtung (98, 124) anzusaugen.

6. Vorrichtung gemäß Anspruch 5, dadurch **gekennzeichnet**, daß die Abscheidevorrichtung (98) und die Vakuumvorrichtung (108) nebeneinander auf ein und derselben Welle angeordnet sind.

7. Vorrichtung gemäß Anspruch 5, dadurch **gekennzeichnet**, daß die Abscheidevorrichtung eine Abscheidekammer (98), ein darin drehbares Laufrad (100), eine Eintrittsöffnung (96) und eine Austrittsöffnung (102) umfaßt, die mit der Vakuumvorrichtung (108) verbunden ist.

8. Vorrichtung gemäß Anspruch 5, dadurch **gekennzeichnet**, daß die Vakuumvorrichtung (108, 126) eine Vakuumpumpe ist, deren Saugstutzen mit dem Austrittsstutzen (106) der Abscheidevorrichtung (98, 124) verbunden ist.

9. Vorrichtung gemäß Anspruch 8, dadurch **gekennzeichnet**, daß die Vakuumpumpe (108, 126) eine sog. Flüssigkeitsringpumpe ist.

10. Vorrichtung gemäß Anspruch 5, dadurch **gekennzeichnet**, daß die Behandlungsvorrichtung für das Medium eine Kreiselpumpe (60, 122) ist.

11. Vorrichtung gemäß Anspruch 5, dadurch **gekennzeichnet,** daß die Bandlungsvorrichtung für das Medium eine mit einem Fluidisierungsläufer versehene Kreiselpumpe ist.

12. Benutzung einer Vorrichtung gemäß Anspruch 11 als Entstipper für Altpapier.

## Revendications

1. Méthode pour la décharge d'un gaz d'un dispositif de traitement pour un milieu dans lequel du gaz est séparé du milieu en cours de traitement et ledit gaz est déchargé du dispositif par aspiration, caractérisée en ce que
- une fraction contenant du gaz, du liquide et un matériau solide passe du dispositif de traitement de la pâte à un dispositif séparé de séparation ;
- ladite fraction est soumise à des forces centrifuges et divisée en deux portions comprenant un mélange solides/liquide et un mélange gaz/gaz-liquide ;
- le mélange solides/liquide est déchargé du dispositif de séparation ;
- le mélange gaz/gaz-liquide est transféré vers le dispositif à vide et
- ledit mélange gaz/gaz-liquide est déchargé du système.

2. Méthode selon la revendication 1, caractérisée en ce que le mélange solides/liquide est ramené au dispositif de traitement ou à son côté d'admission.

3. Méthode selon la revendication 1, appliquée à l'industrie de traitement du bois, dans laquelle le milieu traité est une suspension de fibres contenant du gaz, caractérisée en ce que le mélange solides/liquide est ramené à la tour contenant la suspension de fibres.

4. Méthode selon la revendication 1, appliquée à l'industrie de traitement du bois, dans laquelle le milieu à traiter est une suspension de fibres contenant du gaz, caractérisée en ce que le mélange gaz/gaz-liquide est ramené à la tour contenant la suspension de fibres.

5. Dispositif pour la décharge d'un gaz d'un dispositif de traitement pour un milieu, caractérisé en ce qu'il comprend un dispositif de séparation (98, 124), séparé du dispositif de traitement et comportant une chambre de séparation (98) et un impulseur (100) pour soumettre le gaz et tout milieu à des forces centrifuges et pour séparer ledit gaz du milieu et un dispositif à vide (108, 126) disposé de manière à exraire ledit gaz du dispositif de traitement et à l'entraîner au travers du dispositif de séparation (98, 124).

6. Dispositif selon la revendication 5, caractérisé en ce que le dispositif de séparation (98) et le dispositif à vide (108) sont disposés l'un à côté de l'autre sur le même arbre.

7. Dispositif selon la revendication 5, caractérisé en ce que le dispositif de séparation comprend une chambre de séparation (98), un impulseur (100) rotatif dans ladite chambre, une ouverture d'admission (96) et une ouverture d'évacuation (102), qui est connectée au dispositif à vide (108).

8. Dispositif selon la revendication 5, caractérisé en ce que le dispositif à vide (108, 126) est une pompe à vide, dont la conduite d'aspiration est connectée au conduit de décharge (106) du dispositif de séparation (98, 124) ;

9. Dispositif selon la revendication 8, caractérisé en ce que la pompe à vide (108, 126) est une pompe à anneau liquide.

10. Dispositif selon la revendication 5, caractérisé en ce que le dispositif de traitement pour le milieu est une pompe centrifuge (60, 122).

11. Dispositif selon la revendication 5, caractérisé en ce que le dispositif de traitement pour le milieu est une pompe centrifuge munie d'un rotor de fluidisation.

12. Utilisation d'un dispositif selon la revendication 11 en tant que dépastilleur pour des vieux papiers.
